# EUROPEAN PATENT SPECIFICATION

(11) **EP 0 496 466 B1**
(45) Date of publication and mention of the grant of the patent: **23.10.1996**
(21) Application number: 92200133.4
(22) Date of filing: 17.01.1992
(51) Int. Cl.: A23D 7/00

(54) **Edible spread**
Essbarer Aufstrich
Matière à tartiner comestible

(30) Priority: 23.01.1991 GB 9101461
(43) Date of publication of application: 29.07.1992
(60) Divisional application: 96302806.3
(73) Proprietor: UNILEVER N.V., 3013 AL Rotterdam (NL); UNILEVER PLC, London EC4P 4BQ (GB)
(72) Inventor: Norton, Ian Timothy, Sharnbrook, Bedford MK44 1LQ (GB); Livingston, Robert Middleton, Westcliff-on-Sea, Essex (GB)
(74) Representative: Boerma, Caroline

(56) References cited:
- EP-A- 0 076 549
- EP-A- 0 098 174
- EP-A- 0 146 174
- EP-A- 0 293 980
- EP-A- 0 298 561
- WO-A-81/01353
- FR-A- 1 566 665
- GB-A- 2 244 717

## Description

The present invention relates to edible spreads, more particularly to edible spreads having a reduced fat level. The invention will be described with particular reference to 'low-fat' spreads having a continuous fat phase comprising some 40wt% fat on product and a disperse water phase comprising some 60wt% water-phase on product.

Edible spreads having a 40%wt fat content are well known in the art and have enjoyed considerable commercial success. It is commonplace for such edible spreads to have a thickened or gelled aqueous phase. Numerous components have been proposed as thickeners, including gelling polysaccharides such as carrageenan, modified starches and calcium alginate, and gelling proteins such as gelatine.

For many years gelatine has enjoyed a pre-eminent role in the aqueous phase of reduced fat spreads. Gelatine, as compared to most other gelling agents and particularly as compared to the majority of gelling polysaccharrides, offers the advantage that it has a melting point close to mouth temperature and that spreads containing gelatine consequently disperse rapidly in the mouth, releasing salt and water soluble flavour components. However, gelatine is a protein recovered from the connective tissue of animals and must be extensively purified before use in spreads. Gelatine is not acceptable to some consumers as it is an animal product. Only certain grade of gelatine are suitable for use in spreads and these are not only increasingly expensive but in increasingly short supply. There is a clear need for a gelatine replacer which is not only inexpensive, but preferably also a non-animal product.

EP-A-0 365 738 (Waterford Co-operative Dairy and Trading Society-Sweeney) discloses a low fat spread of the water-in-oil type with an aqueous phase containing 0.1 to 0.4% by weight of protein, preferably a milk protein and 3.25 to 5.0% by weight of a gelling agent, preferably gelatin or sodium alginate. The sole example teaches gelatin. Page 2, lines 16-19 shows that the quantitative data have been determined for gelatin, not for sodium alginate. According to page 4, lines 24- 28 the amount of protein must be kept low, most preferably below 0.5%, because at the pH values employed (4.0 to 5.0, preferably 4.7 to 4.9) it is necessary to ensure that phase inversion does not occur prior to passing through the plate heat exchanger.
Briefly the low-fat spread contains ca 60% (the example) of aqueous phase which contains 0.1 to 0.4 wt% of protein and 3.25 - 5.0.% of gelling agent such as sodium alginate. It is observed that sodium alginate will not gel in the absence of calcium ions or another divalent species; a fact well known to the man skilled in the art. Sodium alginate cannot therefore be described as a "gelling agent".

EP-A-0 293 980 (Unilever-Ernsting) discloses an edible plastified dispersion having a continuous fat phase and a dispersed aqueous phase by cooling a dispersion having a continuous aqueous phase and a dispersed fat phase by passing through a static heat exchanger to cause partial crystallization of fat and subsequent inverting the emulsion by imparting kinetic energy, the use of scraped heat exchangers can thus be dispensed with. The emulsion preferably contains a gelling agent such as carrageenan, gelatin and gelling starch derivatives. Mixtures can be used as well. All examples use i.a. gelatin. Preferably the concentration is sufficiently high to cause the aqueous phase to gel, e.g 0.5-2% carrageenan or 7-20% of gelling starch or sodium caseinate is used. Thickening agents can also be used, examples are non-gelling starch and xanthan gum.

EP-A-0 098 174 (Nabisco Brands, Inc.-Ward) discloses a low fat spread with 30-70% aqueous phase and 30-70% of a continuous fat phase containing a specific, interesterified oil-hardstock mixture. The aqueous phase is said to be conventional and may contain proteinaceous materials such as skim milk powder, whey protein, casein, sodium caseinate or soy protein; hydrophillic colloids such as alginates, xantham, carob gum or other vegetable gums; preservatives, flavorants and flavours. The examples do not disclose the composition of the aqueous phase.

EP-A-0 076 549 (Unilever-Moran et al) discloses a spread containing 20-60% fat phase in the form of an oil-in-water-in-oil dispersion comprising a dispersed phase consisting of a thickened cream of denatured whey protein and an oil present as droplets having an average diameter of 0.2-2 microns, also containing a thickening agent and a continuous fat phase. Preferably the whey is substantially free from other milk proteins. The cream may further contain viscosity increasing agents such as gelatin, starch, carboxymethylcellulose, locust bean gum, carrageenan or mixtures thereof in a level from 0.05 to 5 wt.% and gelatin is preferred at a level exceeding 1%. Higher amounts of gelatin 2.5 to 5 wt.% promoted creaminess on the palate. The examples show gelatin as a thickening agent at various levels.

EP-A-0 146 174 (Unilever-Bodor et al) discloses edible water-in-oil emulsions containing 10-80 wt.% of aqueous phase in which 1-25 wt.% on the total emulsion of discrete granules or agglomerates of native crystalline starch granules of a certain size are present. Starches which increase the viscosity by dissolving are not suitable.

GB-A-2 244 717 (Charleville Research Ltd.-McAuliffe), an intermediate publication, describes a fat blend comprising mono-unsaturated fatty acids which blend contains at least 25% of olive oil and an edible spread based on this fat blend. Also the aqueous phase of the edible spread may milk protein such as from skimmed milk, buttermilk, whey or vegetable proteins and stabilising selected from one or more of the following stabilising agents gelatin, carrageenan, maltodextrin, pectin, sodium alginate and salts of alginic acid such as its sodium salt. The protein derivative constitutes not more than 15 wt.% of the aqueous phase and the stabilising agent not more than 10 wt.%. The examples describe whey powder and sodium alginate alone; sodium caseinate without thickener, skimmed milk powder, maltodextrin and a pectin.

WO-A-8 101 353 (Standard Brands Inc.-Bosco et al) discloses a low fat liquid spread which contains stabilizers which can be microcrystalline cellulose, ethyl cellulose, carrageenin, guar gum, alginate, xanthan gum, soy protein isolate, hydroxypropylmethylcellulose, dextrins, starch, gelatin, locust bean gum, pectin and the like and mixtures thereof. Also specified are commercially available blends containing food starch, locust bean gum, guar gum, gelatin and pectin. Although proteins from milk or vegetable sources can be present the Examples do not identify such constituents. The sour cream powder specified in Example X is evidently a flavour composition.

FR-A-1 566 665 (Gastal) discloses a cheese spread obtained by melting cheese below 100°C. and adding starch as such or in the form of an aqueous solution under stirring until homogeneous and subsequently allowing to cool. Part of the starch can be replaced by sodium or calcium alginate.

USP 5,126,161 (Sanofi-Poppe et al) discloses that for preparing a low fat spread comprising 20 - 50wt.% of fat a suitable aqueous phase can be prepared from a dry powder comprising 70-85 wt% gelatin (gel strength 100-200 blooms), 7.5-15 wt% iota-carrageenan and 7.5-15 wt% xanthan. Column 1, lines 29-45 mentions a whole series of thickening compounds and gelling agents but without stating that they can be interchangeably used. The fact that this specification claims specific ternary mixtures of certain gelatins together with iota-carrageenan and xanthan shows that the whole series of thickening compounds and gelling agents can not be interchangeably used and proves that certain combinations are superior.

Other non-gelatin systems are also disclosed in the research disclosures of Grindsted, the well-known Danish emulsifier company. One such disclosure relates to the use of low-protein/sodium alginate systems in the production of low fat spreads. From the process aspects of this disclosure it is apparent that the product is of a water-continuous nature. Water-continuous products differ markedly from fat-continuous products and in particular are far more sensitive to microbiological spoilage on storage. While fat-continuous products are known to be more stable on storage, the water-continuous products have the advantage of rapid flavour release on consumption. A major difficulty with fat-continuous products is ensuring rapid flavour release in the mouth. As mentioned above, certain combinations of proteins and gelling agents have been proposed to ensure adequate stability on storage and adequate flavour release on consumption. Further combinations which provide rapid flavour release without undesirable organoleptic properties have proved difficult to find.

We have now determined that acceptable fat-continuous spreads may be prepared with a non-gelling, non-proteinaceous thickener system, provided that the overall protein level in the aqueous phase of the spreads is relatively low.

According to a first aspect of the present invention there is provided an edible spread containing a continuous fatty phase in an amount of less than 80wt% and a dispersed proteinaceous aqueous phase, which aqueous phase comprises a quantity of a non-gelling, non-proteinaceous thickener system containing starch and sodium alginate so that the viscosity of the aqueous phase falls in the range of 30-4000 mPa.s (when measured in a Haake RV20 with a concentric cylinder geometry at 100rps,) at 20 degrees centigrade and the aqueous phase contains 0.01-4% protein calculated on the weight of the aqueous phase. Preferably the aqueous phase contains 0.1-1% protein calculated on the weight of the aqueous phase.

Typically, the thickener system comprises a mixture of a non-gelling starch and sodium alginate in appropriate quantities. While the presence of other gelling and or thickening agents is not hereby excluded, preferred embodiments of the present invention are free of such gelling agents.

Products within the scope of the present invention comprise less than 80%wt of a fat phase. Preferably, products comprise 1-70%wt, preferably 20-50% and most preferably around 40%wt of an aqueous phase. Products comprising around 40% fat have approximately half the fat content of butter or margarine.

Particularly preferred thickener systems comprise sodium alginate at a level of 0.1-3% on aqueous phase. In preferred embodiments of the invention, the aqueous phase viscosity falls in the range 200-1400 mPas when measured by the method specified above.

In preferred embodiments of the invention, the aqueous phase protein content falls in the range 0.05-0.5% on aqueous phase.

Generally, the protein will be a milk-protein, caseinates and whey proteins being particularly preferred. In embodiments of the invention which completely exclude animal products, vegetable proteins such as soy-proteins can be employed. It is preferred that the protein should be well-dispersed in the aqueous phase. Preferably any undissolved protein should be in particles of a number-averaged long-dimension of less than 10 microns.

Products comprising a mixture of starch, protein and alginate have been found to be particularly advantageous. Preferred products comprises, as a thickener system, combination of 2-5%wt starch on product, 0.05-0.5%wt protein on product and 0.2-0.4%wt sodium alginate on product.

The fat phase of the product can be of any type used for low fat spreads and preferably comprises a both a liquid vegetable oil component and a so-called vegetable 'hardstock'. Suitable vegetable oils include sunflower oil, soybean oil and other oils rich in polyunsaturated fatty acids. As an alternative to the use of vegetable oils and fats both dairy fats and mixtures of vegetable and dairy fats can be employed. It is also possible to use a hardened fish or other animal oil as the hardstock component. The solids content of the fat blend is preferably similar to that used for conventional edible spreads. Particularly good results were obtained when the solids content at the indicated temperatures was:

| | |
|---|---|
| 10°C | 10-20% |
| 20°C | 6-11% |
| 30°C | 2-4% |

In order that the invention may be further understood it will be described hereafter by way of example.

### EXAMPLES:

### EXAMPLE 1: (not referring to the presently claimed subject matter)

A spread was prepared at laboratory and pilot plant scale with the following overall formulation:

| Water Phase: | |
|---|---|
| Sodium Alginate (Manugel DMB) | 1.8% |
| NaCl | 1.0% |
| Potassium Sorbate | 0.15% |
| Buttermilk Powder (protein source) | 0.8% |
| Water | 55.4% |
| Citric Acid to pH | 5.0 |

| Fat Phase: | |
|---|---|
| Fat blend | 39.6% |
| Emulsifier (Hymono 8903) | 0.2% |
| Emulsifier (BOLEC Z) | 0.2% |
| Colour and flavour (trace) | |

Dry aqueous phase ingredients were mixed and dispersed in de-ionised water. The mix was heated to 70 degrees centigrade and held at this temperature for 10 minutes before cooling to 50 degrees centigrade. The pH was adjusted to 5.0 by the addition of citric acid. The fat phase was prepared at 50 degrees centigrade and added to the aqueous phase to form a pre-mix.

The premix was Pasteurised and processed through an ACAC sequence of VOTATOR (RTM) A-units and C-units. The exit temperatures of the units were 5, 18, 6 and 9 degrees centigrade respectively. The throughput at pilot-plant scale was 90 kg/hr.

The products had a D3,3 (as defined by the method of Alderliesten) of 10-13 microns, margarine-like spreadability and conductivities indicative of a fat continuous character. Products destabilised rapidly in the mouth releasing flavour and salt.

The above mentioned example was repeated with sodium alginate levels of 0.6%, 1.2% and 1.8% by weight of total product, and with sodium caseinate levels of 0.006%, 0.06% and 0.3% by weight of total product. All products exhibited good spreading characteristics and a disperse water phase of droplet size D3,3, close to 10 microns.

### EXAMPLE 2:

A spread was prepared at factory scale with the following overall formulation, using conventional spread processing equipment and a phase-inversion process:

| Fat Phase: | |
|---|---|
| Fat blend | 39.2% |
| Emulsifier (Hymono 8903) | 0.2% |
| Colour and flavour | (trace) |

| Water Phase: | |
|---|---|
| Sodium Alginate (Manugel DH) | 0.4% |
| NaCl | 1.0% |
| Sorbic Acid | 0.1% |
| Sodium Caseinate (protein source) | 0.2% |
| Milk powder or buttermilk powder | 1.5% |
| Paselli Starch (SA-2) | 4.0% |
| Water | to 100% |
| Lactic Acid to pH | 4.9-5.1 |

Samples were prepared with a range of fat phases including a simple fat phase comprising unmodified sunflower oil and a partially hardened soybean oil, and a more complex fat phase comprising unmodified sunflower oil and an interesterified mixture of hardened palm and palm kernel oils. Samples were also prepared with starch levels ranging from 3-4%.

All the above mentioned products exhibited good spreading characteristics and the presence of a disperse water phase was indicated by conductivity measurements.

## Claims

1. An edible spread containing a continuous fatty phase in an amount of less than 80 wt% and a dispersed proteinaceous aqueous phase, which aqueous phase comprises a quantity of a non-gelling, non-proteinaceous thickener system containing starch and sodium alginate so that the viscosity of the aqueous phase falls in the range of 30-4000 mPa.s (when measured in a Haake RV20 with a concentric cylinder geometry at 100rps,) at 20 degrees centigrade and the aqueous phase contains 0.01-4% protein calculated on the weight of the aqueous phase.

2. An edible spread according to claim 1 comprising 1 -70%wt of an aqueous phase calculated on the spread.

3. An edible spread according to claim 1 or 2 comprising 20-50%wt of an aqueous phase calculated on the spread.

4. An edible spread according to any of the claims 1-3 comprising sodium alginate at a level of 0.1-3%wt calculated on the aqueous phase.

5. An edible spread according to any of the claims 1-4, wherein the aqueous phase viscosity falls in the range 200-1400 mPas.

6. An edible spread according to any of the claims 1-5, wherein the aqueous phase protein content falls in the range of 0.05-0.5%wt calculated on the aqueous phase.

7. An edible spread according to any of the claims 1-6, wherein the proteinaceous components of the aqueous phase is milk-protein.

8. An edible spread according to any of the claims 1-5, comprising as a thickener system, the combination of 2-5%wt starch, 0.05-0.5%wt protein and 0.2-0.4%wt sodium alginate calculated on the spread.

## Patentansprüche

1. Eßbarer Aufstrich, enthaltend eine kontinuierliche Fettphase in einer Menge von weniger als 80 Gew.-% und eine dispergierte, proteinhaltige wäßrige Phase, welche wäßrige Phase eine Menge eines nicht gelierenden, nicht proteinhaltigen Verdickungsmittelsystems umfaßt, das Stärke und Natriumalginat enthält, so daß die Viskosität der wäßrigen Phase in den Bereich von 30 bis 4000 mPa.s (bei Messung in einer Haake RV20-Vorrichtung mit einer konzentrischen Zylindergeometrie bei 100 U/min) bei 20°C fällt, und die wäßrige Phase 0,01 bis 4 % Protein, berechnet auf das Gewicht der wäßrigen Phase, enthält.

2. Eßbarer Aufstrich nach Anspruch 1, umfassend 1 bis 70 Gew.-% einer wäßrigen Phase, berechnet auf Den Aufstrich.

3. Eßbarer Aufstrich nach Anspruch 1 oder 2, umfassend 20 bis 50 Gew.-% einer wäßrigen Phase, berechnet auf den Aufstrich.

4. Eßbarer Aufstrich nach irgendeinem der Ansprüche 1 bis 3, umfassend Natriumalginat in einer Konzentration von 0,1 bis 3 Gew.-%, berechnet auf die wäßrige Phase.

5. Eßbarer Aufstrich nach irgendeinem der Ansprüche 1 bis 4, bei dem die Viskosität der wäßrigen Phase in den Bereich von 200 bis 1400 mPa.s fällt.

6. Eßbarer Aufstrich nach irgendeinem der Ansprüche 1 bis 5, bei dem der Proteingehalt der wäßrigen Phase in den Bereich von 0,05 bis 0,5 Gew.-%, berechnet auf die wäßrige Phase, fällt.

7. Eßbarer Aufstrich nach irgendeinem der Ansprüche 1 bis 6, bei dem die proteinhaltigen Komponenten der wäßrigen Phase Milchprotein sind.

8. Eßbarer Aufstrich nach irgendeinem der Ansprüche 1 bis 5, der als Verdickungsmittelsystem die Kombination von 2 bis 5 Gew.-% Stärke, 0,05 bis 0,5 Gew.-% Protein und 0,2 bis 0,4 Gew.-% Natriumalginat, berechnet auf den Aufstrich, umfaßt.

## Revendications

1. Produit à tartiner comestible contenant une phase grasse continue en une quantité de moins de 80% en poids et une phase aqueuse protéinée dispersée, la phase aqueuse comprenant une quantité d'un système épaississant non gélifiant, non protéiné contenant de l'amidon et un alginate de sodium de façon que la viscosité de la phase aqueuse se range dans la gamme des 30-4000 mPa.s (mesurée dans un Haake RV20 à géométrie cylindrique concentrique à 100 t/s) à 20°C et la phase aqueuse contenant de 0,01 à 4% de protéine, calculé par rapport au poids de la phase aqueuse.

2. Produit à tartiner comestible selon la revendication 1, comprenant de 1 à 70% en poids d'une phase aqueuse, calculé par rapport au produit à tartiner.

3. Produit à tartiner comestible selon la revendication 1 ou 2, comprenant de 20 à 50% en poids d'une phase aqueuse, calculé par rapport au produit à tartiner.

4. Produit à tartiner comestible selon les revendications 1 à 3, comprenant de l'alginate de sodium en une quantité de 0,1 à 3% en poids, calculé par rapport à la phase aqueuse.

5. Produit à tartiner comestible selon l'une quelconque des revendications 1 à 4, dans lequel la viscosité de la phase aqueuse se range dans la gamme des 200 à 1400 mPas.

6. Produit à tartiner comestible selon l'une quelconque des revendications 1 à 5, dans lequel la teneur en protéine de la phase aqueuse se range dans la gamme des 0,05 à 0,5% en poids, calculé par rapport à la phase aqueuse.

7. Produit à tartiner comestible selon l'une quelconque des revendications 1 à 6, dans lequel les composants protéinés de la phase aqueuse sont la protéine de lait.

8. Produit à tartiner comestible selon l'une quelconque des revendications 1 à 5, comprenant comme système épaississant, la combinaison de 2 à 5% en poids d'amidon, 0,05 à 0,5% en poids de protéine et 0,2 à 0,4% en poids d'alginate de sodium, calculé par rapport au produit à tartiner.
